(19) Europäisches Patentamt
European Patent Office
Office européen des brevets

(11) **EP 3 433 518 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **17708734.3**

(22) Anmeldetag: **01.03.2017**

(51) Int Cl.:
*F16K 7/04* (2006.01)    *B01J 8/18* (2006.01)
*B01J 8/00* (2006.01)    *C01B 33/027* (2006.01)

(86) Internationale Anmeldenummer:
**PCT/EP2017/054754**

(87) Internationale Veröffentlichungsnummer:
**WO 2017/162414 (28.09.2017 Gazette 2017/39)**

(54) **WIRBELSCHICHTREAKTOR MIT QUETSCHARMATUREN FÜR DIE HERSTELLUNG VON POLYSILICIUM-GRANULAT SOWIE VERFAHREN UND VERWENDUNG DAFÜR**

FLUIDIZED BED REACTOR WITH PINCHING FITTINGS FOR PRODUCING POLYSILICON GRANULATE, AND METHOD AND USE FOR SAME

RÉACTEUR À LIT FLUIDISÉ À GARNITURES À PINCEMENT POUR LA PRODUCTION DE SILICIUM POLYCRISTALLIN GRANULAIRE ET PROCÉDÉ ET UTILISATION ASSOCIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2016 DE 102016204651**

(43) Veröffentlichungstag der Anmeldung:
**30.01.2019 Patentblatt 2019/05**

(73) Patentinhaber: **Wacker Chemie AG**
**81737 München (DE)**

(72) Erfinder:
• **FORSTPOINTNER, Gerhard**
**84556 Kastl (DE)**
• **BAUMANN, Bernhard**
**84547 Emmerting (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
EP-A1- 1 211 445    WO-A2-2014/177377
US-A- 5 992 818    US-B1- 6 412 756

EP 3 433 518 B1

**Beschreibung**

Technisches Gebiet

Die vorliegende Erfindung betrifft die Verwendung wenigstens einer Quetscharmatur umfassend eine Quetschmanschette zur Regulierung oder Absperrung eines Stroms von partikelförmigem Polysilicium, eine Wirbelschichtreaktoranlage zur Herstellung von Polysilicium-Granulat, in welcher wenigstens eine solche Quetscharmatur zum Einsatz kommt, sowie ein Verfahren zur Herstellung von Polysilicium-Granulat unter Verwendung einer solchen Quetscharmatur.

Hintergrund der Erfindung

Polysilicium-Granulat (Granulat aus polykristallinem Silicium) ist eine Alternative zum im Siemens-Verfahren hergestellten Polysilicium. Während das Polysilicium im Siemens-Verfahren als zylindrischer Siliciumstab anfällt, der vor seiner Weiterverarbeitung zeit- und kostenaufwändig zu so genanntem Chippoly zerkleinert und ggf. wiederum gereinigt werden muss, besitzt Polysilicium-Granulat Schuttguteigenschaften und kann direkt als Rohmaterial z. B. zur Einkristallerzeugung für die Photovoltaik- und Elektronikindustrie eingesetzt werden. Die Herstellung von Polysilicium-Granulat erfolgt im Wirbelschichtreaktor. Dies geschieht durch Fluidisierung von Siliciumpartikeln (Polysilicium-Keimpartikel) mittels einer Gasströmung in einer Wirbelschicht, wobei diese über eine Heizvorrichtung auf hohe Temperaturen (ca. 600 °C bis 1200 °C) aufgeheizt wird. Durch Zugabe eines siliciumhaltigen Reaktionsgases erfolgt eine Pyrolysereaktion an der heißen Partikeloberfläche. Dabei scheidet sich elementares Silicium auf den Keimpartikeln ab und die einzelnen Partikel wachsen im Durchmesser an (Polysilicium-Granulatpartikel). Durch den regelmäßigen Abzug von angewachsenen Partikeln und Zugabe kleinerer Siliciumpartikel als Keimpartikel kann das Verfahren kontinuierlich betrieben werden. Als siliciumhaltiges Eduktgas sind Silicium-Halogenverbindungen (z. B. Chlorsilane oder Bromsilane), Monosilan ($SiH_4$), sowie Mischungen dieser Gase mit Wasserstoff geeignet. Derartige Verfahren und Vorrichtungen sind beispielsweise aus US 4786477 A, EP 1 990 314 A2, WO 2014 177377 A2, WO 2014 180693 A1, WO 2014 191274 A1, WO 2015 104127 A1 und WO 2015 140028 A1 bekannt.

Bei der Herstellung von Polysilicium-Granulat nach dem Wirbelschicht-Verfahren befinden sich die Polysilicium-Keimpartikel und das Zielprodukt (Polysilicium-Granulat) in der Regel in vom Wirbelschichtreaktor getrennten Vorratsbehältern, die bei Bedarf mit diesem verbunden werden. Bei einem kontinuierlichen Betrieb erfolgt die Dosierung der Keimpartikel aus Vorratsbehältern, die in regelmäßigen Zeitabständen nachgefüllt werden müssen. Auch die Sammelbehälter für das fertige Zielprodukt müssen in regelmäßigen Zeitabständen entleert werden. Beide Behältertypen müssen zur Befüllung bzw. Entleerung vom Reaktionsraum mittels Absperrarmaturen gas- und feststoffdicht von der Reaktionsatmosphäre getrennt werden. Dazu werden üblicherweise Absperr- bzw. Regelarmaturen verwendet.

Als gasdicht abschließende Absperrarmaturen können feststoffgeeignete Kugelhähne, wie beispielsweise in DE 199 49 577 A1 beschrieben, oder Plattenschieber, wie beispielsweise in EP 2 270 371 A2 beschrieben, verwendet werden. Es besteht auch die Möglichkeit durch Kombination von nicht-gasdicht abschließender Armatur und nachfolgender gasdicht abschließender Armatur eine geeignete Abtrennung zu erzielen, wobei die nicht-gasdicht schließende Armatur zuerst den Feststoffstrom unterbricht bevor die gasdicht schließende Armatur schaltet. Bei den vorgenannten Lösungen besteht jedoch die Schwierigkeit darin, tatsächlich gasdicht und möglichst kontaminationsarm über eine Vielzahl von Schaltspielen abzusperren.

Um hochreines polykristallines Silicium-Granulat zu erzeugen müssen darüber hinaus nicht nur die Einsatzstoffe hohe Reinheit aufweisen, sondern auch die verwendeten Komponenten zum Betrieb des Wirbelschichtreaktors müssen aus Werkstoffen gefertigt sein, die keinerlei Verunreinigungen an Einsatzstoffe und Granulat abgeben.

In US 2015 0104369 A1 ist beispielsweise mikrozellulares Polyurethan (PU) als Schutzschicht in flexiblen Rohren und Schläuchen beschrieben, die mit dem Reaktionsraum bei der Herstellung von Polysilicium-Granulat in Verbindung stehen. Das mikrozellulare PU wird dabei als Schutzschicht vor metallischen Kontaminationen durch die Rohrleitungsoberflächen eingesetzt. Untersuchungen haben jedoch gezeigt, dass PU nur eine geringe chemische Beständigkeit gegenüber Chlorsilanen aufweist. Die Anwendungsgrenze für mikrozellulares PU liegt daher bei 200 °C. Positionen näher am Reaktor sind somit ohne thermische Schädigung des Materials nicht möglich.

Mit den besonderen Eigenschaften des Polysilicium-Granulats (starke Abrasivität, hohe Härte, hohe Reinheit) und den Anforderungen an das Herstellverfahren (Kontaminationsgefahr, hohe Temperatur) sind daher besondere Eigenschaften der ausgewählten Absperrorgane verbunden. Das produkt- bzw. medienberührte Absperrorgan darf im Idealfall keine oder kaum Verunreinigungen auf das Silicium übertragen, muss in der eingesetzten Atmosphäre chemisch beständig sein und muss unter Feststoffstrom im Durchgang dauerhaft gasdicht abschließen können.

EP 1 211 445 A1 offenbart ein Quetschventil zur Verwendung in einer Fluidtransportleitung für verschiedene industrielle Gebiete, wie etwa chemische Fabriken, Halbleiterproduktion, Lebensmittelverarbeitung, Biotechnologie oder dergleichen. Das Quetschventil ist kompakt und führt zu einer verringerten Beschädigung des Rohrkörpers während des Öffnens und Schließens des Ventils.

Die Aufgabe der vorliegenden Erfindung bestand somit darin, geeignete Absperr- bzw. Regelarmaturen zu finden, welche zur Verwendung bei der Regulierung und/oder Absperrung eines Stroms von partikelförmigem Polysilicium, insbesondere für die Verwendung in einer Wirbelschichtreaktoranlage zur Herstellung von Silicium-Granulat, geeignet sind. Die Absperr- bzw. Regelarmatur sollte den Polysilicium-Strom dabei vorzugsweise dauerhaft gasdicht und kontaminationsarm regulieren und/oder absperren können, eine hohe Lebensdauer haben, chemisch und thermisch beständig sein sowie der hohen Härte und Abrasivität des Polysiliciums gerecht werden.

Überraschenderweise hat sich gezeigt, dass Quetscharmaturen mit Quetschmanschetten aus Ethylen-Propylen-Dien-Kautschuk und/oder einem fluorierten Elastomer hierzu besonders geeignet sind.

Zeichnungen

Figur 1 zeigt eine Quetschmanschette mit zweilagigem Aufbau.

Figur 2 zeigt den Aufbau einer Wirbelschichtreaktoranlage zur Herstellung von Polysilicium-Granulat unter Verwendung von Quetscharmaturen.

Detaillierte Beschreibung

Die vorliegende Erfindung betrifft die Verwendung wenigstens einer Quetscharmatur umfassend eine Quetschmanschette zur Regulierung und/oder Absperrung eines Stroms von partikelförmigem Polysilicium mit einer Partikelgröße von 150 $\mu$m bis 10.000 $\mu$m, gemessen mittels dynamischer Bildanalyse nach ISO 13322-2, Messbereich: 30 $\mu$m - 30 mm, Art der Analyse: Trockenmessung von Pulvern und Granulaten, dadurch gekennzeichnet, dass die Quetschmanschette ein Elastomer umfasst, das aus der Gruppe bestehend aus Ethylen-Propylen-Dien-Kautschuk, fluoriertem Elastomer und einer Kombination von Ethylen-Propylen-Dien-Kautschuk und fluoriertem Elastomer ausgewählt wird.

Eine Quetscharmatur, auch Schlauchquetschventil oder Schlauchquetscharmatur genannt, besteht in der Regel aus einem rund oder elliptisch geformten (meist metallischem) Gehäuse und einem speziell angefertigten hochelastischen Elastomerschlauchstück - der Quetschmanschette - welche mittig in dem Gehäuse zentriert und jeweils an beiden Enden zum Beispiel mit Hilfe von zwei Flanschen oder Muffen befestigt wird. Durch die Quetschmanschette fließt der Feststoffpartikelstrom.

Zwischen dem Gehäuse und der Quetschmanschette befindet sich typischerweise ein sogenannter Steuer-/Funktionsraum über den die Quetschmanschette beispielsweise pneumatisch, hydraulisch oder mechanisch verformt werden kann, um den Querschnitt einzuengen und den Feststoffpartikelstrom abzusperren bzw. zu regulieren. Wird das System entspannt, öffnet sich die Quetschmanschette wieder und die Feststoffpartikel können über den gesamten Querschnitt durch die Quetschmanschette fließen.

Schlauchquetscharmaturen sind in anderen industriellen Bereichen wie der Lebensmittelindustrie, Abwassertechnologie u.a. zum Absperren von abrasiven, korrosiven und faserförmigen Produkten bereits seit langem bewährt. Übliche Elastomere, die häufig in Schlauchquetschventilen eingesetzt werden sind zum Beispiel SBR (Styrol-Butadien-Kautschuk), EPDM (Ethylen-Propylen-Dien-Kautschuk), NR (Naturkautschuk), NBR (Nitril-Butadien-Kautschuk), CSM (chlorsulfoniertes Polyethylen), CR (Chloropren-Kautschuk), IIR (Isobuten-Isopren-Kautschuk), FKM (Fluorkautschuk), BR (Butadien-Kautschuk), PUR (Polyurethane) oder SI (Silikone). Verschiedene Modifikationen der vorgenannten Elastomere werden zur Anpassung bestimmter Eigenschaften von verschiedenen kommerziellen Herstellern angeboten. Die große Variationsmöglichkeit der chemischen Zusammensetzung des Elastomers zur Beeinflussung der mechanischen, physikalischen, chemischen und qualitativen Eigenschaften stellt die Grundlage der gemäß der vorliegenden Erfindung speziell für Polysilicium-Granulat entwickelten Manschetten dar.

Gemäß der vorliegenden Erfindung umfasst die Quetschmanschette ein Elastomer, das aus der Gruppe bestehend aus Ethylen-Propylen-Dien-Kautschuk (EPDM), fluoriertem Elastomer und einer Kombination von Ethylen-Propylen-Dien-Kautschuk und fluoriertem Elastomer ausgewählt wird. Vorzugsweise besteht die Quetschmanschette ausschließlich aus Ethylen-Propylen-Dien-Kautschuk, fluoriertem Elastomer oder einer Kombination von Ethylen-Propylen-Dien-Kautschuk und fluoriertem Elastomer sowie gegebenenfalls einer oder mehrerer verstärkenden Gewebeeinlagen und gegebenenfalls Haftvermittler (zum Beispiel für den Fall eines mehrlagigen Aufbaus der Quetschmanschette).

Das fluorierte Elastomer ist ein elastisches Polymer, dass aus wenigstens einem fluorhaltigen Monomer hergestellt wird. Fluorhaltige Monomere sind beispielsweise Vinylidenfluorid, Hexafluorpropylen, Tetrafluoroethylen und Perfluormethylvinylether. Die fluorierten Elastomere können dabei Polymerisate von einem oder mehreren fluorhaltigen Monomeren mit einem oder mehreren nicht-fluorhaltigen Monomeren wie beispielsweise Propen oder Ethen sein. Geeignete fluorierte Elastomere sind Fluorkautschuk (FKM), Perfluorkautschuk (FFKM), Tetrafluorethylen/Propylen-Kautschuk (FEPM) und fluorierter Silikonkautschuk. Vorzugsweise ist das fluorierte Elastomer FKM oder FFKM.

Es hat sich gezeigt, dass Ethylen-Propylen-Dien-Kautschuk und fluorierte Elastomere im Vergleich zu anderen Manschettenwerkstoffen optimierte Eigenschaften hinsichtlich der Abriebfestigkeit, Kontaminationsgefahr, sowie thermischer und chemischer Beständigkeit gegenüber den bei der Herstellung von Polysilicium-Granulat auftretenden Edukten, Produkten und Abgasen aufweisen. Die sehr gute chemische Beständigkeit von EPDM und fluorierten Elastomeren speziell gegen die bei der Herstellung von Polysilicium-Granulat verwendeten bzw. entstehenden Stoffe Monosilan, Chlorsilane, HCl und Wasserstoff machen die Anwendung in unmittelbarer Umgebung des Wirbelschichtreaktors möglich.

Im Hinblick auf die Lebensdauer der Quetschmanschette wird die Quetscharmatur vorzugsweise an Stellen mit möglichst geringer thermischer Beanspruchung eingesetzt. Vorzugsweise wird die Quetscharmatur bei einer Temperatur von 0 °C bis 100 °C eingesetzt, besonders bevorzugt bei einer Temperatur von 15 °C bis 90 °C, ganz besonders bevorzugt bei einer Temperatur von 20 °C bis 80 °C.

Besonders die fluorierten Elastomere zeigen eine hohe Temperaturbeständigkeit. Speziell FFKM kann bei Temperaturen bis 320 °C und kurzzeitig sogar bis 360 °C eingesetzt werden. Positionen näher am Reaktor sind damit ohne thermische Schädigung des Elastomers möglich. Quetscharmaturen mit Quetschmanschetten aus fluoriertem Elastomer, insbesondere FFKM, können somit bei einer Temperatur von bis zu 320 °C eingesetzt werden, bevorzugt von 200 °C bis 320 °C, besonders bevorzugt bei einer Temperatur von 220 °C bis 300 °C, ganz besonders bevorzugt bei einer Temperatur von 250 °C bis 290 °C.

Bevorzugt enthält das Elastomer der Quetschmanschette weniger als 1 mg Bor, weniger als 20 mg Phosphor und weniger als 1 mg Arsen bezogen auf 1 kg Elastomer.

Weiterhin enthält das Elastomer vorzugsweise weniger als 200 mg Aluminium, weniger als 200 mg Magnesium und weniger als 100 mg Zink bezogen auf 1 kg Elastomer.

Das Elastomer weist vorzugsweise einen Gesamtmetallgehalt von weniger als 10.000 mg auf, besonders bevorzugt weniger als 5.000 mg basierend auf 1 kg Elastomer. Zum Gesamtmetallgehalt zählen neben den oben genannten Mg, Al und Zn auch Ba, Be, Bi, Ca, Cd, Co, Cr, Cu, Fe, K, Li, Mn, Mo, Na, Ni, Pb, Pt, Sb, Sr, Ti, V, Zr und W.

Elastomere entsprechender Reinheit sind bei verschiedenen Anbietern kommerziell erhältlich.

Die Bestimmung der metallischen Verunreinigungen erfolgt mittels axialem ICP (inductively coupled plasma)-Emissionspektrometrie. Die Proben werden dazu in einer Mikrowelle sauer aufgeschlossen (HF/HNO$_3$/H$_2$O$_2$). Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", wobei ein HF-resistentes Probeneinführsystem aus PFA (Perfluoralkoxy-Polymer) verwendet wird.

Der Add-On (Kontamination) auf die Reinheit des erzeugten Polysilicium-Granulats lässt sich durch den erfindungsgemäßen Einsatz der oben beschriebenen Quetschmanschetten im Vergleich zu üblichen Manschetten aus NBR beispielsweise um den Faktor vier reduzieren.

Zur qualitativen Beurteilung der Kontamination wird das Polysilicium-Granulat mit den zu testenden Werkstoffen in Kontakt gebracht und im Anschluss daran über Standardtestverfahren der physikalischen und chemischen Analytik von Polysilicium überprüft. Dabei wird zum einen ein Testkristall (Monokristall) gezogen, aus dem eine Probe in Form einer Scheibe herausgesägt, poliert und mit flüssigem Helium gekühlt wird. Diese Probe wird auf die Elemente Bor, Phosphor, Aluminium und Arsen mittels Photolumineszenz-Spektroskopie untersucht. Zum anderen erfolgt eine direkte Messung des Granulats auf Metalle mittels ICP wie oben beschrieben.

Mit dem Einsatz der neuen Elastomere in den Quetschmanschetten konnte die durchschnittliche Standzeit der Armaturen im Vergleich zu Quetscharmaturen aus anderen üblichen Elastomeren wie zum Beispiel NBR mehr als verdoppelt werden. Unter Standzeit ist dabei der Zeitraum vom Einbau der Armatur bis zum ereignisgetriebenen Ausbau der Armatur zu verstehen. Ein Ereignis kann zum Beispiel eine defekte Manschette oder eine andere Störung sein. Vorzugsweise beträgt die Standzeit der Quetscharmatur 1 Jahr oder mehr.

Die Lebensdauer von Manschetten wird durch die Schaltzyklenzahl charakterisiert, welche ohne auftretende Schäden an der Manschette durchgeführt werden kann. Vorzugsweise liegt die Schaltzyklenzahl der Manschette bei 50.000 oder mehr.

Je größer der Feststoffanteil des abzusperrenden Medienstromes beim Schließvorgang ist, desto stärker wird der Manschettenwerkstoff logischerweise mechanisch beansprucht. Als extremster Belastungsfall ist das Schließen der Manschette in eine Polysilicium-Granulat-Feststoffsäule hinein anzusehen. Speziell in diesem Anwendungsfall bilden sich bei den oben beschriebenen Manschetten aus EPDM und/oder fluoriertem Elastomer im Vergleich zu anderen Materialien keine Risse im Quetschbereich aus. Rissbildung lässt sich zum Beispiel durch Endoskopierung bei eingebauter Armatur beobachten.

Ein weiterer wichtiger Aspekt bei der Auswahl des Elastomers für Quetschmanschetten ist das Permeationsverhalten von Gasen durch das Elastomer. Das Diffusionsvolumen durch die Elastomermanschette kann überschlägig mit folgender Permeationsformel (1) ermittelt werden:

$$\dot{V}_{12} = P \times \frac{A}{s} \times (p_1 - p_2) \qquad (1)$$

$\dot{V}_{12}$: Gasvolumenstrom des durch die Permeationsfläche diffundierenden Gases [Nm³/s]
P: Permeationskoeffizient [m²/s x bar]
A: Fläche der Platte [m²]
s: Dicke der Fläche [m]
$p_1$, $p_2$: Partialdrücke [bar]
t: Zeit [s]

Die Permeationskoeffizienten von verschieden Elastomeren für Stickstoff und Wasserstoff sind im Stand der Technik bekannt. Hier sei beispielsweise auf folgende Literaturstelle verwiesen: KGK Kautschuk Gummi Kunststoffe 55. Jahrgang, Nr.6/2002; Technoprofil TP Blau GmbH, Ausgabe 09-2013.

Aus nachfolgender Tabelle 1 sind beispielsweise die Permeationskoeffizienten von NR, CR und NBR zu entnehmen.

Tabelle 1: Permeationskoeffizient P bei 25 °C in $10^{-10}$ [m²/sbar]

| | Gas | |
|---|---|---|
| | $N_2$ | $H_2$ |
| Naturgummi | 0,07-0,19 | 0,19-0,68 |
| CR | 0,01-0,02 | 0,13-0,46 |
| NBR | 0,02 | 0,15 |

Der Permeationskoeffizient von EPDM ist für Stickstoff bei Raumtemperatur (25 °C) um bis zu 8-fach höher als der von NBR. Für FKM beträgt der Permeationskoeffizient für Stickstoff bei Raumtemperatur jedoch etwa nur die Hälfte des von NBR. Beste Ergebnisse hinsichtlich der Diffusionsfestigkeit liefert daher eine Manschette, die FKM umfasst, vorzugsweise ausschließlich aus FKM besteht. Die Diffusionsfestigkeit kann beispielsweise durch ein am Quetscharmaturengehäuse angebrachtes Manometer geprüft werden, da sich bei einer erhöhten Diffusionsrate der Gehäuseüberdruck schneller ausbildet.

Die Quetschmanschette kann einlagig oder mehrlagig, beispielsweise zweilagig, aufgebaut sein. Zur Erhöhung des Diffusionswiderstandes können EPDM und fluoriertes Elastomer kombiniert werden. Als besonders bevorzugte Ausführungsform hat sich hier eine Kombination aus EPDM als Seelenmaterial (Außenlage) und FKM als Decklage (Innenlage) erwiesen.

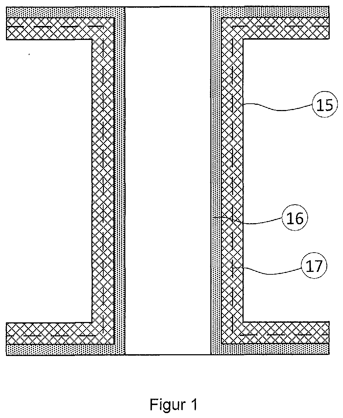

In Figur 1 ist beispielhaft eine Quetschmanschette mit zweilagigem Aufbau dargestellt. Die produktberührte Innenlage **16** (Decke) der Manschette ist vorzugsweise aus FKM hergestellt, die Außenlage **15** (Seele) besteht vorzugsweise aus EPDM. Zusätzlich kann in die Außenlage gegebenenfalls ein oder mehrere verstärkende Gewebe **17** eingearbeitet sein. Die Seele der Manschette in Verbindung mit dem Gewebe gibt der Manschette die erforderliche mechanische Stabilität. Die Decke verbessert die Abriebfestigkeit und die Diffusionsbeständigkeit und verringert Produktkontaminationen. Die optionalen Gewebeeinlagen in der Quetschmanschette dienen unter anderem der Druckfestigkeit und der optimalen Funktion einer Manschette sowie deren Standzeit. Die Haftung zwischen den beiden Elastomeren (beispielsweise durch Verwendung eines Haftvermittlers) sollte dabei vorzugsweise auf Schaltzyklen von 50.000 oder mehr ausgelegt sein.

Neben der Optimierung des Diffusionswiderstands bietet ein mehrschichtiger Aufbau der Manschette darüber hinaus die Möglichkeit einer Verschleißerkennung. Durch die spezifischen Komponenten der Elastomere kann über die Spurenanalytik des Polysilicium-Granulats anhand der Masterelemente des Elastomers ein Schaden oder Verschleiß der Deckenlage detektiert werden.

Im Vergleich zu einem mehrlagigen Aufbau spricht für einen einlagigen Aufbau der Umstand, dass der Haftvermittler zwischen den unterschiedlichen Elastomeren entfällt. Dadurch ergibt sich meist ein geringerer und damit kostengünstigerer Fertigungsaufwand.

Die Größen- und Formparameter (Partikelgrößenverteilung, Partikelform, etc.) der Polysilicium-Partikel werden mittels dynamischer Bildanalyse (DIA) nach ISO 13322-2 (Messbereich: 30 μm - 30 mm, Art der Analyse: Trockenmessung von Pulvern und Granulaten) bestimmt. Der mittlere Durchmesser der Keimpartikel beträgt vorzugsweise mindestens 400 μm. Das polykristalline Silicium-Granulat umfasst Partikel mit Partikelgrößen von 150 μm bis 10.000 μm auf. Der massenbezogene Medianwert der Partikelgrößenverteilung beträgt im Silicium-Granulat vorzugsweise 850 μm bis 2.000 μm.

Die oben beschriebenen Quetscharmaturen mit Quetschmanschetten werden daher vorzugsweise zur Regulierung und/oder Absperrung eines Stroms von Polysilicium mit einer mittleren Partikelgröße von 100 μm bis 5.000 μm, besonders bevorzugt von 150 μm bis 2.000 μm, ganz besonders bevorzugt von 200 μm bis 1.000 μm verwendet.

Vorzugsweise werden Quetscharmaturen mit einer Nennweite von DN 15 bis DN 100, vorzugsweise von DN 20 bis DN 80, insbesondere DN 50 verwendet.

Quetscharmaturen mit den oben beschriebenen Quetschmanschetten sind für die Verwendung in einer Wirbelschichtreaktoranalage zur Herstellung von Polysilicium-Granulat besonders geeignet. Eine detaillierte Beschreibung des Aufbaus sowie der Prozessparameter bei der Herstellung von granularem Polysilizium im Wirbelschichtreaktor sind beispielsweise aus den Offenlegungsschriften EP 1 990 314 A2, WO 2014 177377 A2, WO 2014 180693 A1, WO 2014 191274 A1, WO 2015 104127 A1 und WO 2015 140028 A1 bekannt.

Die vorliegende Erfindung betrifft demnach auch eine Wirbelschichtreaktoranlage zur Herstellung von Polysilicium-Granulat umfassend

- wenigstens einen Wirbelschichtreaktor für die Herstellung von Polysilicium-Granulat aus Polysilicium-Keimpartikeln,
- wenigstens einen über eine Zuführungsleitung mit dem Wirbelschichtreaktor verbundenen Vorratsbehälter für die Polysilicium-Keimpartikel, und
- wenigstens einen über eine Abführungsleitung mit dem Wirbelschichtreaktor verbundenen Sammelbehälter für das Polysilicium-Granulat,

wobei in der Zuführungsleitung zwischen dem Vorratsbehälter und dem Wirbelschichtreaktor und/oder in der Abführungsleitung zwischen dem Wirbelschichtreaktor und dem Sammelbehälter wenigstens eine Quetscharmatur umfassend eine Quetschmanschette angeordnet ist,

wobei die Quetschmanschette ein Elastomer umfasst, das aus der Gruppe bestehend aus Ethylen-Propylen-Dien-Kautschuk, fluoriertem Elastomer und einer Kombination von Ethylen-Propylen-Dien-Kautschuk und fluoriertem Elastomer ausgewählt ist.

Vorzugsweise umfasst die Wirbelschichtreaktoranlage zusätzlich wenigstens ein Dosierorgan, welches in der Zuführungsleitung zwischen dem Vorratsbehälter und dem Wirbelschichtreaktor und/oder in der Abführungsleitung zwischen dem Wirbelschichtreaktor und dem Sammelbehälter angeordnet ist. Dabei ist die Quetscharmatur vorzugsweise in der Zuführungsleitung bzw. in der Abführungsleitung zwischen dem Dosierorgan und dem Wirbelschichtreaktor angeordnet.

Vorzugsweise wird in der Wirbelschichtreaktoranlage eine Quetschmanschette in den oben als bevorzugt beschriebenen Ausführungsformen eingesetzt.

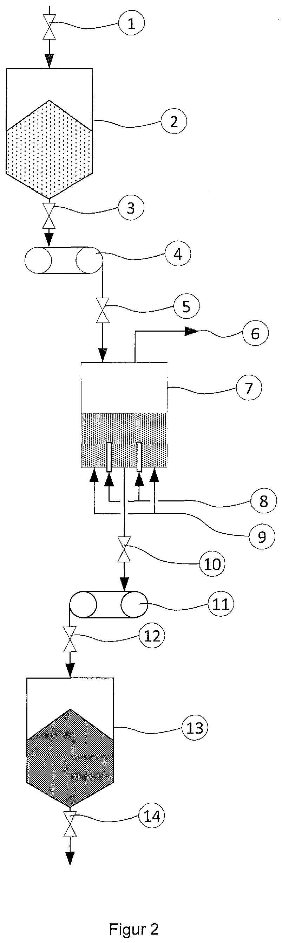

Figur 2 zeigt beispielhaft einen Wirbelschichtreaktor mit Keimpartikelzugabe und Produktabzug. Die Keimpartikel werden dem Vorratsbehälter **2** über die Quetscharmatur **1** zugeführt und über die Quetscharmatur **3** dem Dosierorgan **4** zugeführt. Die Quetscharmatur **5** ist nahe am Wirbelschichtreaktor **7** angebracht und ist deshalb vorzugsweise mit einer Manschette aus einem fluorierten Elastomer, wie beispielsweise FKM, bestückt, um der höheren Betriebstemperatur dauerhaft Stand zu halten. Der Wirbelschichtreaktor **7** ist weiterhin mit zwei Düsen zur Einspeisung des Prozessgases **8,** zwei Einspeisungen für das Fluidisierungsgas **9,** einer Abgasöffnung zur Ableitung der Prozessabgase **6** aus dem Reaktor und einer Abzugsöffnung für die fertigen Silicium-Granulatpartikel am Boden des Reaktors ausgestattet. Der Partikelabzug kann mittels Quetscharmatur **10** unterbrochen werden, die als reaktornahe Armatur vorzugsweise mit einer Manschette aus einem fluorierten Elastomer, wie beispielsweise FKM, bestückt ist. Mittels Dosierorgan **11** werden die Partikel aus dem Reaktor **7** geregelt entnommen und dem nachfolgenden Sammelbehälter **13** zugeführt. Zur Entleerung des Behälters **13** wird die Armatur **12** geschlossen und die Quetscharmatur **14** geöffnet.

Weiterhin betrifft die vorliegende Erfindung ein Verfahren zur Herstellung von Polysilicium-Granulat umfassend

- Bereitstellen von Polysilicium-Keimpartikeln in wenigstens einem Vorratsbehälter
- Zuführung der Polysilicium-Keimpartikel in wenigstens einen Wirbelschichtreaktor zur Herstellung von Polysilicium-Granulat
- Abführung des Polysilicium-Granulats in wenigstens einen Sammelbehälter,

dadurch gekennzeichnet, dass der Strom der Polysilicium-Keimpartikeln und/oder des Polysilicium-Granulats bei der Zuführung und/oder Abführung durch wenigstens eine Quetscharmatur umfassend eine Quetschmanschette geregelt und/oder abgesperrt wird,

wobei die Quetschmanschette ein Elastomer umfasst, das aus der Gruppe bestehend aus Ethylen-Propylen-Dien-Kautschuk, fluoriertem Elastomer und einer Kombination von Ethylen-Propylen-Dien-Kautschuk und fluoriertem Elastomer ausgewählt ist.

Vorzugsweise wird dabei eine Quetschmanschette in den oben als bevorzugt beschriebenen Ausführungsformen eingesetzt.

Weiterhin erfolgt die Herstellung des Polysilicium-Granulats vorzugsweise in der oben beschriebenen Wirbelschichtreaktoranlage, besonders bevorzugt in einer Wirbelschichtreaktoranalage in den oben als bevorzugt beschriebenen Ausführungsformen.

Beispiele

Um für die Polysilicium-Granulat-Herstellung geeignete Quetschmanschetten-Werkstoffe zu ermitteln wurden verschiedene Materialen auf ihre physikalischen und chemischen Eigenschaften untersucht.

Um beispielsweise die Abriebfestigkeit zu ermitteln, wurden in einem standardisierten Testverfahren die Elastomere NBR, FKM und EPDM darauf geprüft, wieviel Kohlenstoff sie auf die Oberfläche des Granulats übertragen. Die Bestimmung der Kontamination mit Kohlenstoff erfolgt mittels eines automatischen Analysators. Dies ist detailliert beschrieben in US 2013/0216466 A1 in den Absätzen [0108] bis [0158] sowie in DE 10 2012 202 640 A1 in den Absätzen [0097] bis [0147].

In einem zweiten Test wurden Materialproben über einen Zeitraum von 72 Stunden einer Prozessgasatmosphäre bestehend aus Chlorsilanen, HCl und Wasserstoff bei einer Temperatur von 80 °C gelagert und anschließend hinsichtlich ihrer chemischer Beständigkeit überprüft. Insbesondere wurde geprüft, ob das Material seine Eigenschaften verändert z.B. quillt, schrumpft, versprödet oder sich zersetzt.

Die Ergebnisse der Versuche sind in Tabelle 2 dargestellt:

Tabelle 2. Vergleichsversuche

|  | **1** | **2** | **3** | **4** |
|---|---|---|---|---|
| Manschettenmaterial | NBR | FKM | EPDM | Referenz |
| Oberflächen-C in ppmw | 3 bis 5 | 0,5 bis 1 | 1,5 bis 2 | 0,05 bis 0,3 |
| chemische Stabilität | bedingt | sehr gut | gut | ---- |

Überraschenderweise wurde gefunden, dass die Nutzung von FKM und EPDM als Manschettenmaterial zu einer geringeren Verunreinigung der Referenzprobe führte als NBR. Darüber hinaus zeigten FKM und EPDM gute bis sehr gute chemische Stabilität gegenüber den bei der Polysilicium-Granulat-Herstellung auftretenden Gasen.

**Patentansprüche**

1. Verwendung wenigstens einer Quetscharmatur umfassend eine Quetschmanschette zur Regulierung und/oder Absperrung eines Stroms von partikelförmigem Polysilicium mit einer Partikelgröße von 150 $\mu$m bis 10.000 $\mu$m, gemessen mittels dynamischer Bildanalyse nach ISO 13322-2, Messbereich: 30 $\mu$m - 30 mm, Art der Analyse: Trockenmessung von Pulvern und Granulaten,
   **dadurch gekennzeichnet, dass** die Quetschmanschette ein Elastomer umfasst, das aus der Gruppe bestehend aus Ethylen-Propylen-Dien-Kautschuk, fluoriertem Elastomer und einer Kombination von Ethylen-Propylen-Dien-Kautschuk und fluoriertem Elastomer ausgewählt wird.

2. Verwendung gemäß Anspruch 1, wobei das fluorierte Elastomer Fluorkautschuk oder Perfluorkautschuk ist.

3. Verwendung gemäß Anspruch 1 oder 2, wobei die Quetschmanschette eine Innenlage (16) aus Fluorkautschuk und eine Außenlage (15) aus Ethylen-Propylen-Dien-Kautschuk umfasst.

4. Verwendung gemäß Anspruch 3, wobei in die Außenlage zusätzlich ein verstärkendes Gewebe (17) eingearbeitet ist.

5. Verwendung gemäß einem der vorangehenden Ansprüche, wobei das Elastomer weniger als 1 mg Bor, weniger als 20 mg Phosphor und weniger als 1 mg Arsen bezogen auf 1 kg Elastomer enthält.

6. Verwendung gemäß einem der vorangehenden Ansprüche, wobei das Elastomer weniger als 200 mg Aluminium, weniger als 200 mg Magnesium und weniger als 100 mg Zink bezogen auf 1 kg Elastomer enthält.

7.  Wirbelschichtreaktoranlage zur Herstellung von Polysilicium-Granulat umfassend

    - wenigstens einen Wirbelschichtreaktor (7) für die Herstellung von Polysilicium-Granulat aus Polysilicium-Keimpartikeln,
    - wenigstens einen mit dem Wirbelschichtreaktor (7) über eine Zuführungsleitung verbundenen Vorratsbehälter (2) für die Polysilicium-Keimpartikel, und
    - wenigstens einen mit dem Wirbelschichtreaktor (7) über eine Abführungsleitung verbundenen Sammelbehälter (13) für das Polysilicium-Granulat,

    **dadurch gekennzeichnet, dass**
    in der Zuführungsleitung zwischen dem Vorratsbehälter (2) und dem Wirbelschichtreaktor (7) und/oder in der Abführungsleitung zwischen dem Wirbelschichtreaktor (7) und dem Sammelbehälter (13) wenigstens eine Quetscharmatur (5, 10) umfassend eine Quetschmanschette angeordnet ist,
    wobei die Quetschmanschette ein Elastomer umfasst, das aus der Gruppe bestehend aus Ethylen-Propylen-Dien-Kautschuk, fluoriertem Elastomer und einer Kombination von Ethylen-Propylen-Dien-Kautschuk und fluoriertem Elastomer ausgewählt ist.

8.  Wirbelschichtreaktoranlage gemäß Anspruch 7, wobei die Wirbelschichtreaktoranlage zusätzlich wenigstens ein Dosierorgan (4, 10) umfasst, welches in der Zuführungsleitung zwischen dem Vorratsbehälter (2) und dem Wirbelschichtreaktor (7) und/oder in der Abführungsleitung zwischen dem Wirbelschichtreaktor (7) und dem Sammelbehälter (13) angeordnet ist.

9.  Wirbelschichtreaktoranlage gemäß Anspruch 8, wobei die Quetscharmatur (5, 10) in der Zuführungsleitung und/oder in der Abführungsleitung zwischen dem Dosierorgan (4, 10) und dem Wirbelschichtreaktor (7) angeordnet ist.

10. Wirbelschichtreaktoranlage gemäß einem der vorangehenden Ansprüche 7 bis 9, wobei das fluorierte Elastomer der Quetschmanschette Fluorkautschuk oder Perfluorkautschuk ist.

11. Wirbelschichtreaktoranlage gemäß einem der Ansprüche 7 bis 9, wobei die Quetschmanschette eine Innenlage (16) aus Fluorkautschuk und eine Außenlage (15) aus Ethylen-Propylen-Dien-Kautschuk umfasst.

12. Wirbelschichtreaktoranlage gemäß Anspruch 11, wobei in die Außenlage der Quetschmanschette zusätzlich ein verstärkendes Gewebe (17) eingearbeitet ist.

13. Wirbelschichtreaktoranlage gemäß einem der Ansprüche 7 bis 12, wobei das Elastomer der Quetschmanschette weniger als 1 mg Bor, weniger als 20 mg Phosphor und weniger als 1 mg Arsen bezogen auf 1 kg Elastomer enthält.

14. Wirbelschichtreaktoranlage gemäß einem der vorangehenden Ansprüche 7 bis 13, wobei das Elastomer der Quetschmanschette weniger als 200 mg Aluminium, weniger als 200 mg Magnesium und weniger als 100 mg Zink bezogen auf 1 kg Elastomer enthält.

15. Verfahren zur Herstellung von Polysilicium-Granulat umfassend

    - Bereitstellen von Polysilicium-Keimpartikeln in wenigstens einem Vorratsbehälter (2)
    - Zuführung der Polysilicium-Keimpartikel in wenigstens einen Wirbelschichtreaktor (7) zur Herstellung von Polysilicium-Granulat
    - Abführung des Polysilicium-Granulats in wenigstens einen Sammelbehälter (13),

    **dadurch gekennzeichnet, dass** der Strom der Polysilicium-Keimpartikeln und/oder des Polysilicium-Granulats bei der Zuführung und/oder Abführung durch wenigstens eine Quetscharmatur umfassend eine Quetschmanschette geregelt und/oder abgesperrt wird,
    wobei die Quetschmanschette ein Elastomer umfasst, das aus der Gruppe bestehend aus Ethylen-Propylen-Dien-Kautschuk, fluoriertem Elastomer und einer Kombination von Ethylen-Propylen-Dien-Kautschuk und fluoriertem Elastomer ausgewählt ist.

**Claims**

1. Use of at least one pinch fitting comprising a pinch-fitting sleeve for controlling and/or stopping of a flow of particulate polysilicon having a particle size of 150 $\mu$m to 10 000 $\mu$m, measured by means of dynamic image analysis to ISO 13322-2, measurement range: 30 $\mu$m - 30 mm, analysis type: dry measurement of powders and granules, **characterized in that** the pinch-fitting sleeve comprises an elastomer selected from the group consisting of ethylene-propylene-diene rubber, fluorinated elastomer and a combination of ethylene-propylene-diene rubber and fluorinated elastomer.

2. Use according to Claim 1, wherein the fluorinated elastomer is fluoro rubber or perfluoro rubber.

3. Use according to Claim 1 or 2, wherein the pinch-fitting sleeve comprises an inner layer (16) of fluoro rubber and an outer layer (15) of ethylene-propylene-diene rubber.

4. Use according to Claim 3, wherein a reinforcing weave (17) has additionally been incorporated into the outer layer.

5. Use according to any of the preceding claims, wherein the elastomer contains less than 1 mg of boron, less than 20 mg of phosphorus and less than 1 mg of arsenic, based on 1 kg of elastomer.

6. Use according to any of the preceding claims, wherein the elastomer contains less than 200 mg of aluminum, less than 200 mg of magnesium and less than 100 mg of zinc, based on 1 kg of elastomer.

7. Fluidized bed reactor plant for production of granular polysilicon, comprising

   - at least one fluidized bed reactor (7) for the production of granular polysilicon from polysilicon seed particles,
   - at least one reservoir vessel (2) for the polysilicon seed particles which is connected to the fluidized bed reactor (7) via an inlet conduit, and
   - at least one collecting vessel (13) for the granular polysilicon which is connected to the fluidized bed reactor (7) via an outlet conduit,

   **characterized in that** at least one pinch fitting (5, 10) comprising a pinch-fitting sleeve is disposed in the inlet conduit between the reservoir vessel (2) and the fluidized bed reactor (7) and/or in the outlet conduit between the fluidized bed reactor (7) and the collecting vessel (13),
   wherein the pinch-fitting sleeve comprises an elastomer selected from the group consisting of ethylene-propylene-diene rubber, fluorinated elastomer and a combination of ethylene-propylene-diene rubber and fluorinated elastomer.

8. Fluidized bed reactor plant according to Claim 7, wherein the fluidized bed reactor plant additionally comprises at least one metering unit (4, 10) disposed in the inlet conduit between the reservoir vessel (2) and the fluidized bed reactor (7) and/or in the outlet conduit between the fluidized bed reactor (7) and the collecting vessel (13).

9. Fluidized bed reactor plant according to Claim 8, wherein the pinch fitting (5, 10) is disposed in the inlet conduit and/or in the outlet conduit between the metering unit (4, 10) and the fluidized bed reactor (7).

10. Fluidized bed reactor plant according to any of the preceding Claims 7 to 9, wherein the fluorinated elastomer of the pinch-fitting sleeve is fluoro rubber or perfluoro rubber.

11. Fluidized bed reactor plant according to any of Claims 7 to 9, wherein the pinch-fitting sleeve comprises an inner layer (16) of fluoro rubber and an outer layer (15) of ethylene-propylene-diene rubber.

12. Fluidized bed reactor plant according to Claim 11, wherein a reinforcing weave (17) has additionally been incorporated into the outer layer of the pinch-fitting sleeve.

13. Fluidized bed reactor plant according to any of Claims 7 to 12, wherein the elastomer of the pinch-fitting sleeve contains less than 1 mg of boron, less than 20 mg of phosphorus and less than 1 mg of arsenic, based on 1 kg of elastomer.

14. Fluidized bed reactor plant according to any of the preceding Claims 7 to 13, wherein the elastomer of the pinch-fitting sleeve contains less than 200 mg of aluminum, less than 200 mg of magnesium and less than 100 mg of zinc, based on 1 kg of elastomer.

15. Process for producing granular polysilicon, comprising

    - providing polysilicon seed particles in at least one reservoir vessel (2),
    - feeding the polysilicon seed particles into at least one fluidized bed reactor (7) for production of granular polysilicon,
    - discharging the granular polysilicon into at least one collecting vessel (13),

**characterized in that** the flow of polysilicon seed particles and/or of the granular polysilicon in the feeding and/or discharging is controlled and/or stopped by at least one pinch fitting comprising a pinch-fitting sleeve,
wherein the pinch-fitting sleeve comprises an elastomer selected from the group consisting of ethylene-propylene-diene rubber, fluorinated elastomer and a combination of ethylene-propylene-diene rubber and fluorinated elastomer.

**Revendications**

1. Utilisation d'au moins une garniture à pincement comprenant un manchon à pincement pour la régulation et/ou l'arrêt d'un courant de polysilicium particulaire d'une taille de particule de 150 $\mu$m à 10 000 $\mu$m, mesurée par analyse d'images dynamique selon ISO 13322-2, plage de mesure : 30 $\mu$m à 30 mm, type d'analyse : mesure à sec de poudres et de granulats,
**caractérisée en ce que** le manchon à pincement comprend un élastomère, qui est choisi dans le groupe constitué par un caoutchouc d'éthylène-propylène-diène, un élastomère fluoré et une combinaison d'un caoutchouc d'éthylène-propylène-diène et d'un élastomère fluoré.

2. Utilisation selon la revendication 1, dans laquelle l'élastomère fluoré est un caoutchouc fluoré ou un caoutchouc perfluoré.

3. Utilisation selon la revendication 1 ou 2, dans laquelle le manchon à pincement comprend une couche intérieure (16) en caoutchouc fluoré et une couche extérieure (15) en caoutchouc d'éthylène-propylène-diène.

4. Utilisation selon la revendication 3, dans laquelle un tissu renforçant (17) est en outre incorporé dans la couche extérieure.

5. Utilisation selon l'une quelconque des revendications précédentes, dans laquelle l'élastomère contient moins de 1 mg de bore, moins de 20 mg de phosphore et moins de 1 mg d'arsenic, pour 1 kg d'élastomère.

6. Utilisation selon l'une quelconque des revendications précédentes, dans laquelle l'élastomère contient moins de 200 mg d'aluminium, moins de 200 mg de magnésium et moins de 100 mg de zinc, pour 1 kg d'élastomère.

7. Unité de réacteur à lit fluidisé pour la fabrication d'un granulat de polysilicium, comprenant :

    - au moins un réacteur à lit fluidisé (7) pour la fabrication d'un granulat de polysilicium à partir de particules germes de polysilicium,
    - au moins un contenant de stockage (2) pour les particules germes de polysilicium, raccordé avec le réacteur à lit fluidisé (7) par une conduite d'alimentation, et
    - au moins un contenant de collecte (13) pour le granulat de polysilicium, raccordé avec le réacteur à lit fluidisé (7) par une conduite de déchargement,

**caractérisée en ce qu'**au moins une garniture à pincement (5, 10) comprenant un manchon à pincement est agencée dans la conduite d'alimentation entre le contenant de stockage (2) et le réacteur à lit fluidisé (7) et/ou dans la conduite de déchargement entre le réacteur à lit fluidisé (7) et le contenant de collecte (13),
le manchon à pincement comprenant un élastomère, qui est choisi dans le groupe constitué par un caoutchouc d'éthylène-propylène-diène, un élastomère fluoré et une combinaison d'un caoutchouc d'éthylène-propylène-diène et d'un élastomère fluoré.

8. Unité de réacteur à lit fluidisé selon la revendication 7, dans laquelle l'unité de réacteur à lit fluidisé comprend en outre au moins un dispositif de dosage (4, 10), qui est agencé dans la conduite d'alimentation entre le contenant de stockage (2) et le réacteur à lit fluidisé (7) et/ou dans la conduite de déchargement entre le réacteur à lit fluidisé (7) et le contenant de collecte (13).

9. Unité de réacteur à lit fluidisé selon la revendication 8, dans laquelle la garniture à pincement (5, 10) est agencée dans la conduite d'alimentation et/ou dans la conduite de déchargement entre le dispositif de dosage (4, 10) et le réacteur à lit fluidisé (7).

10. Unité de réacteur à lit fluidisé selon l'une quelconque des revendications 7 à 9 précédentes, dans laquelle l'élastomère fluoré du manchon à pincement est un caoutchouc fluoré ou un caoutchouc perfluoré.

11. Unité de réacteur à lit fluidisé selon l'une quelconque des revendications 7 à 9, dans laquelle le manchon à pincement comprend une couche intérieure (16) en caoutchouc fluoré et une couche extérieure (15) en caoutchouc d'éthylène-propylène-diène.

12. Unité de réacteur à lit fluidisé selon la revendication 11, dans laquelle un tissu renforçant (17) est en outre incorporé dans la couche extérieure du manchon à pincement.

13. Unité de réacteur à lit fluidisé selon l'une quelconque des revendications 7 à 12, dans laquelle l'élastomère du manchon à pincement contient moins de 1 mg de bore, moins de 20 mg de phosphore et moins de 1 mg d'arsenic, pour 1 kg d'élastomère.

14. Unité de réacteur à lit fluidisé selon l'une quelconque des revendications 7 à 13 précédentes, dans laquelle l'élastomère du manchon à pincement contient moins de 200 mg d'aluminium, moins de 200 mg de magnésium et moins de 100 mg de zinc, pour 1 kg d'élastomère.

15. Procédé de fabrication d'un granulat de polysilicium, comprenant :

   - la préparation de particules germes de polysilicium dans au moins un contenant de stockage (2),
   - l'introduction des particules germes de polysilicium dans au moins un réacteur à lit fluidisé (7) pour la fabrication d'un granulat de polysilicium,
   - le déchargement du granulat de polysilicium dans au moins un contenant de collecte (13),

   **caractérisé en ce que** le courant des particules germes de polysilicium et/ou du granulat de polysilicium est régulé et/ou arrêté par au moins une garniture à pincement comprenant un manchon à pincement lors de l'alimentation et/ou du déchargement,
   le manchon à pincement comprenant un élastomère, qui est choisi dans le groupe constitué par un caoutchouc d'éthylène-propylène-diène, un élastomère fluoré et une combinaison d'un caoutchouc d'éthylène-propylène-diène et d'un élastomère fluoré.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4786477 A
- EP 1990314 A2
- WO 2014177377 A2
- WO 2014180693 A1
- WO 2014191274 A1
- WO 2015104127 A1
- WO 2015140028 A1

- DE 19949577 A1
- EP 2270371 A2
- US 20150104369 A1
- EP 1211445 A1
- US 20130216466 A1
- DE 102012202640 A1

**In der Beschreibung aufgeführte Nicht-Patentliteratur**

- Literaturstelle verwiesen. KGK Kautschuk Gummi Kunststoffe 55. Technoprofil TP Blau GmbH, Juni 2002